# EUROPEAN PATENT APPLICATION

(11) **EP 4 790 645 A1**
(43) Date of publication of application: **12.08.2026**
(21) Application number: 25215465.3
(22) Date of filing: 13.11.2025
(51) Int. Cl.: G06T 7/20

(54) **SYSTEM FOR ESTIMATING POSITION OF MOVING OBJECT IN MANUFACTURING PROCESS FOR MOVING OBJECT**

(30) Priority: 05.02.2025 JP 2025017236
(71) Applicant: TOYOTA JIDOSHA KABUSHIKI KAISHA, Toyota-shi, Aichi-ken, 471-8571 (JP)
(72) Inventor: SAITO, Yasuhiro, Toyota-shi, 471-8571 (JP)
(74) Representative: TBK

(57) **Abstract**

A system for estimating a position of a moving object in a manufacturing process for the moving object includes: an acquisition unit configured to acquire three-dimensional point cloud data of the moving object measured using a distance measuring device; a region estimation unit configured to estimate a liquid-wet region that is a region containing liquid droplets in a combined region including a region on a surface of the moving object and a region around the moving object; and a position estimation unit configured to estimate the position of the moving object using three-dimensional point cloud data obtained by excluding three-dimensional point cloud data of the liquid-wet region from the acquired three-dimensional point cloud data.

## Description

### BACKGROUND OF THE INVENTION

### 1. Field of the Invention

The present disclosure relates to a system for estimating the position of a moving object in a manufacturing process for the moving object.

### 2. Description of Related Art

Japanese Unexamined Patent Application Publication (Translation of PCT Application) No. 2017-538619 (JP 2017-538619 A) discloses a technology of causing a vehicle to travel autonomously or through remote control during a vehicle manufacturing process. In controlling such a vehicle that does not require an occupant, the position of the vehicle is estimated. The position estimation is performed by matching three-dimensional point cloud data related to the vehicle with map information prepared in advance. The three-dimensional point cloud data is acquired using a distance measuring device that is provided in a vehicle manufacturing factory and adopts a technology such as Light Detection and Ranging (LiDAR).

### SUMMARY OF THE INVENTION

One of the steps in the vehicle manufacturing process is a step that uses water, such as a water leakage inspection step for a vehicle. In such a step, water is sprayed onto the vehicle using a water spraying device such as a shower tester. Water droplets and splashes generated at this time scatter laser light emitted by the distance measuring device. This may result in deviations included in the three-dimensional point cloud data to be used for matching, which may reduce the accuracy of the vehicle position estimation. This problem is common to steps that use any liquid such as a cleaning liquid as well as water. This problem is also common to manufacturing processes for any moving object as well as vehicles.

The present disclosure can be implemented in the following aspects.
(1) One aspect of the present disclosure provides a system for estimating a position of a moving object in a manufacturing process for the moving object. This system includes: an acquisition unit configured to acquire three-dimensional point cloud data of the moving object measured using a distance measuring device; a region estimation unit configured to estimate a liquid-wet region that is a region containing liquid droplets in a combined region including a region on a surface of the moving object and a region around the moving object; and a position estimation unit configured to estimate the position of the moving object using three-dimensional point cloud data obtained by excluding three-dimensional point cloud data of the liquid-wet region from the acquired three-dimensional point cloud data.
   In the system of this aspect, the position estimation unit estimates the position of the moving object using the three-dimensional point cloud data obtained by excluding the three-dimensional point cloud data of the liquid-wet region from the three-dimensional point cloud data. Therefore, compared to a configuration in which the position is estimated without excluding the three-dimensional point cloud data of the liquid-wet region, it is possible to suppress the occurrence of deviations in the three-dimensional point cloud data due to the liquid droplets and to suppress a decrease in the accuracy of the position estimation.
(2) The system of the above aspect may further include a water spraying device position acquisition unit configured to acquire position information related to a position of a water spraying device configured to spray water onto the moving object. The region estimation unit may be configured to estimate the liquid-wet region using the acquired position information.
   In the system of this aspect, the region estimation unit estimates the liquid-wet region using the position information related to the position of the water spraying device. Therefore, the liquid-wet region can be estimated even if the position of the water spraying device varies.
(3) The system of the above aspect may further include a step information acquisition unit configured to acquire step information related to a step that is being performed on the moving object. The step information may include information related to a region onto which a liquid is sprayed in a water leakage inspection step or a cleaning step that is being performed on the moving object. The region estimation unit may be configured to estimate the liquid-wet region using the acquired step information.
   In the system of this aspect, the region estimation unit estimates the liquid-wet region using the step information including the information related to the region onto which the liquid is sprayed. Therefore, the liquid-wet region can be estimated with high accuracy by preparing appropriate step information in advance.
(4) The system of the above aspect may further include a captured image data acquisition unit configured to acquire captured image data of the moving object and surroundings of the moving object. The captured image data may be obtained by an image capturing device. The region estimation unit may be configured to estimate the liquid-wet region using the acquired captured image data.
   In the system of this aspect, the region estimation unit estimates the liquid-wet region using the captured image data obtained by the image capturing device. Therefore, the liquid-wet region can be estimated, for example, using the camera that captures images inside the factory.

The present disclosure can be implemented not only in the above aspects as a system, but also in other aspects such as a vehicle position estimation device, a position estimation method, a program for implementing the method, a non-transitory recording medium on which the program is recorded, and a program product. For example, the program product may be provided as a recording medium on which the program is recorded, or as a program product that can be distributed via a network.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram illustrating a system according to a first embodiment;
FIG. 2 is a block diagram showing the configuration of the system;
FIG. 3 is a flowchart showing the processing procedure of travel control for a vehicle according to the first embodiment;
FIG. 4 is a flowchart showing the procedure for estimating the position of the vehicle including a liquid-wet region;
FIG. 5 illustrates a water leakage inspection step;
FIG. 6 illustrates a schematic configuration of a system according to a fourth embodiment; and
FIG. 7 is a flowchart showing the processing procedure of travel control for a vehicle according to the fourth embodiment.

### DETAILED DESCRIPTION OF EMBODIMENTS

### A. First Embodiment

### Overview of System 50

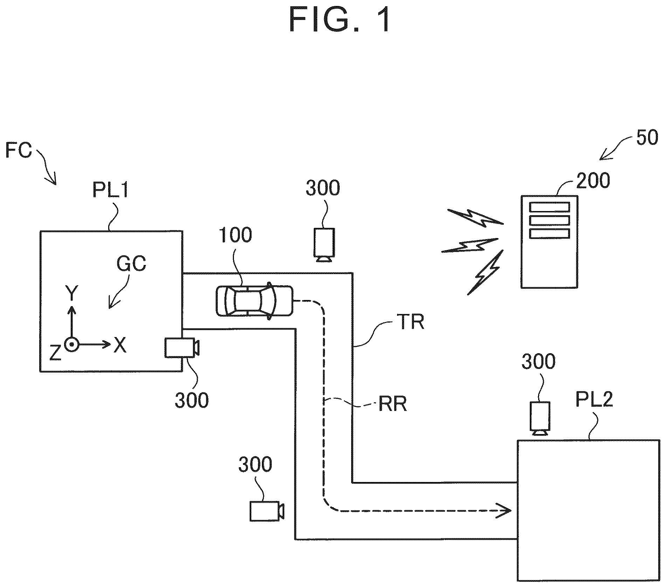

FIG. 1 is a conceptual diagram illustrating a system 50 according to a first embodiment. The system 50 is used to cause a vehicle 100 serving as a moving object to travel by unattended driving. The system 50 is also used to estimate the position of the vehicle 100 in a manufacturing process.

In the present disclosure, the term "moving object" means a movable object, and may be, for example, a vehicle or an electric vertical take-off and landing aircraft (socalled flying car). The vehicle may be a vehicle that travels on wheels or a vehicle that travels on endless tracks, and may be, for example, a passenger car, a truck, a bus, a two-wheeled vehicle, a four-wheeled vehicle, or a construction vehicle. The vehicle includes a battery electric vehicle (BEV), a gasoline-powered vehicle, a hybrid electric vehicle, and a fuel cell electric vehicle. When the moving object is other than a vehicle, the terms "vehicle" and "car" as used in the present disclosure can be replaced with "moving object" as appropriate, and the term "travel" can be replaced with "move" as appropriate.

The vehicle 100 can travel by unattended driving. The term "unattended driving" means driving that is not based on a traveling operation by an occupant. The traveling operation refers to an operation related to at least one of "running," "turning," and "stopping" of the vehicle 100. The unattended driving is implemented through automatic or manual remote control using a device located outside the vehicle 100, or through autonomous control by the vehicle 100. The vehicle 100 traveling by unattended driving may have occupants on board who do not perform the traveling operation. Examples of the occupants who do not perform the traveling operation include persons simply seated in seats of the vehicle 100, and persons performing tasks other than the traveling operation, such as assembly, inspection, and operation on switches, while being on board the vehicle 100. Driving through the traveling operation by an occupant is sometimes referred to as "attended driving."

The term "remote control" herein includes "full remote control" in which all operations of the vehicle 100 are completely determined from outside the vehicle 100, and "partial remote control" in which part of the operations of the vehicle 100 is determined from outside the vehicle 100. The term "autonomous control" includes "full autonomous control" in which the vehicle 100 autonomously controls its operations without receiving any information from devices outside the vehicle 100, and "partial autonomous control" in which the vehicle 100 autonomously controls its operations using information received from devices outside the vehicle 100.

In the present embodiment, the system 50 is used in a factory FC in which the vehicle 100 is manufactured. The reference coordinate system of the factory FC is a global coordinate system GC, and any position in the factory FC can be represented by X, Y, and Z coordinates in the global coordinate system GC. The factory FC includes a first location PL1 and a second location PL2. The first location PL1 and the second location PL2 are connected by a travel path TR along which the vehicle 100 can travel. Various steps for manufacturing the vehicle 100 are performed at the first location PL1 and the second location PL2. Examples of such steps include a component assembly step, a painting step, a cleaning step, and an inspection step. In the present embodiment, a water leakage inspection step is performed at the second location PL2. The "water leakage inspection step" will be described later. The vehicle 100 moves from the first location PL1 to the second location PL2 along the travel path TR by unattended driving.

In the factory FC, a plurality of external sensors 300 is installed along the travel path TR. The positions of the external sensors 300 in the factory FC are adjusted in advance.

### Configuration of System 50

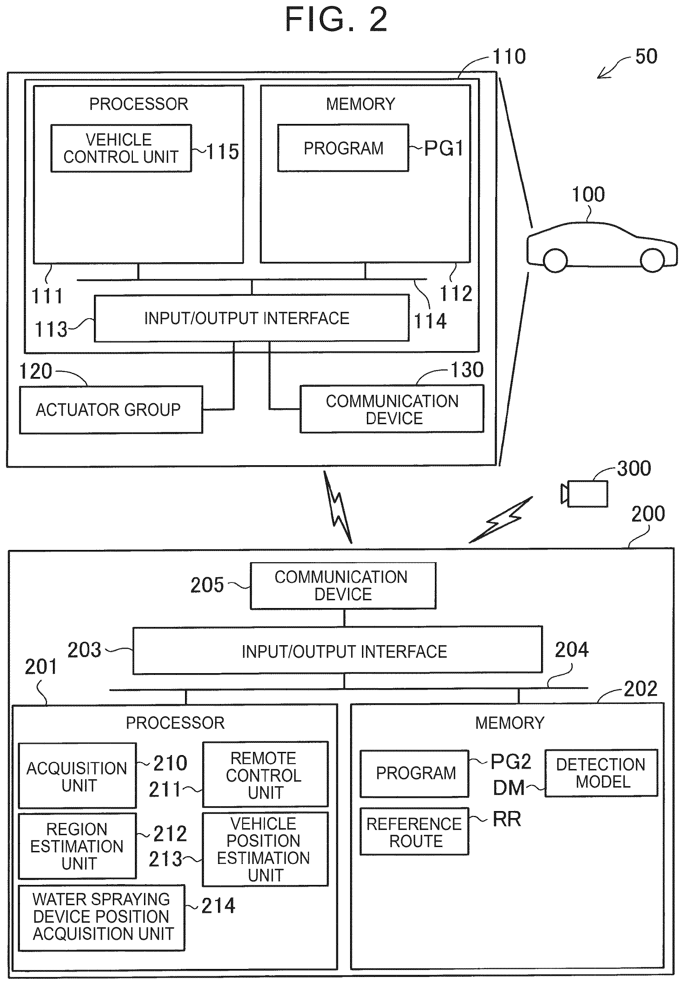

FIG. 2 is a block diagram showing the configuration of the system 50. The system 50 includes the vehicle 100, a server 200, and one or more external sensors 300.

The vehicle 100 includes a vehicle control device 110 for controlling each part of the vehicle 100, an actuator group 120 including one or more actuators that are driven under the control of the vehicle control device 110, and a communication device 130 for communicating with external devices such as the server 200 by wireless communication. The actuator group 120 includes an actuator of a drive device for accelerating the vehicle 100, an actuator of a steering device for changing the traveling direction of the vehicle 100, and an actuator of a braking device for decelerating the vehicle 100.

The vehicle control device 110 is a computer including a processor 111, a memory 112, an input/output interface 113, and an internal bus 114. The processor 111, the memory 112, and the input/output interface 113 are connected via the internal bus 114 to bidirectionally communicate with each other. The actuator group 120 and the communication device 130 are connected to the input/output interface 113. The processor 111 implements various functions including a function as a vehicle control unit 115 by executing a program PG1 stored in the memory 112.

The vehicle control unit 115 causes the vehicle 100 to travel by controlling the actuator group 120. The vehicle control unit 115 can cause the vehicle 100 to travel by controlling the actuator group 120 using a traveling control signal received from the server 200. The traveling control signal is a control signal for causing the vehicle 100 to travel. In the present embodiment, the traveling control signal includes an acceleration and a steering angle of the vehicle 100 as parameters. In other embodiments, the traveling control signal may include the speed of the vehicle 100 as a parameter instead of or in addition to the acceleration of the vehicle 100.

The external sensors 300 are located outside the vehicle 100. The external sensor 300 in the present embodiment is a distance measuring device that adopts Light Detection and Ranging (LiDAR). The external sensor 300 outputs three-dimensional point cloud data of the vehicle 100. The external sensor 300 includes a communication device (not shown) and can communicate with other devices such as the server 200 by wired or wireless communication.

The server 200 is a computer including a processor 201, a memory 202, an input/output interface 203, and an internal bus 204. The processor 201, the memory 202, and the input/output interface 203 are connected via the internal bus 204 to bidirectionally communicate with each other. A communication device 205 for communicating with various devices outside the server 200 is connected to the input/output interface 203. The communication device 205 can communicate with the vehicle 100 by wireless communication, and can communicate with each external sensor 300 by wired or wireless communication. The processor 201 implements various functions including functions as an acquisition unit 210, a remote control unit 211, a region estimation unit 212, a vehicle position estimation unit 213, and a water spraying device position acquisition unit 214 by executing a program PG2 stored in the memory 202.

The acquisition unit 210 acquires three-dimensional point cloud data of the vehicle 100 measured using the external sensor 300. The three-dimensional point cloud data measured by the external sensor 300 is transmitted to the server 200 via the communication device (not shown) of the external sensor 300.

The remote control unit 211 generates a traveling control signal for controlling the actuator group 120 of the vehicle 100 using detection results from various sensors including the external sensor 300, and transmits the traveling control signal to the vehicle 100, thereby causing the vehicle 100 to travel by remote control. The remote control unit 211 may generate and output not only the traveling control signal but also control signals for controlling, for example, various auxiliary devices provided in the vehicle 100 and actuators that operate various types of equipment such as wipers, power windows, and lamps. That is, the remote control unit 211 may operate the various types of equipment and the various auxiliary devices by remote control.

The region estimation unit 212 estimates a liquid-wet region that is a region containing liquid droplets in a combined region including a region on the surface of the vehicle and a region around the vehicle. The "liquid-wet region" and the "estimation of the liquid-wet region" will be described later.

The vehicle position estimation unit 213 estimates the position of the vehicle 100 using the three-dimensional point cloud data of the vehicle 100 acquired by the acquisition unit 210. In the present disclosure, the vehicle position estimation unit 213 estimates the position of the vehicle 100 using three-dimensional point cloud data obtained by excluding the three-dimensional point cloud data of the liquid-wet region from the three-dimensional data. The "estimation of the position of the vehicle 100" will be described later. The vehicle position estimation unit 213 corresponds to a "position estimation unit" in the present disclosure.

The water spraying device position acquisition unit 214 acquires position information related to the position of a water spraying device. The water spraying device is used to spray water onto the vehicle 100 in a step that uses water, such as the water leakage inspection step or the cleaning step. In the present embodiment, the position information of the water spraying device is acquired using three-dimensional point cloud data measured by the external sensor 300. The water spraying device position acquisition unit 214 will be described in detail later.

### Travel Control for Vehicle 100

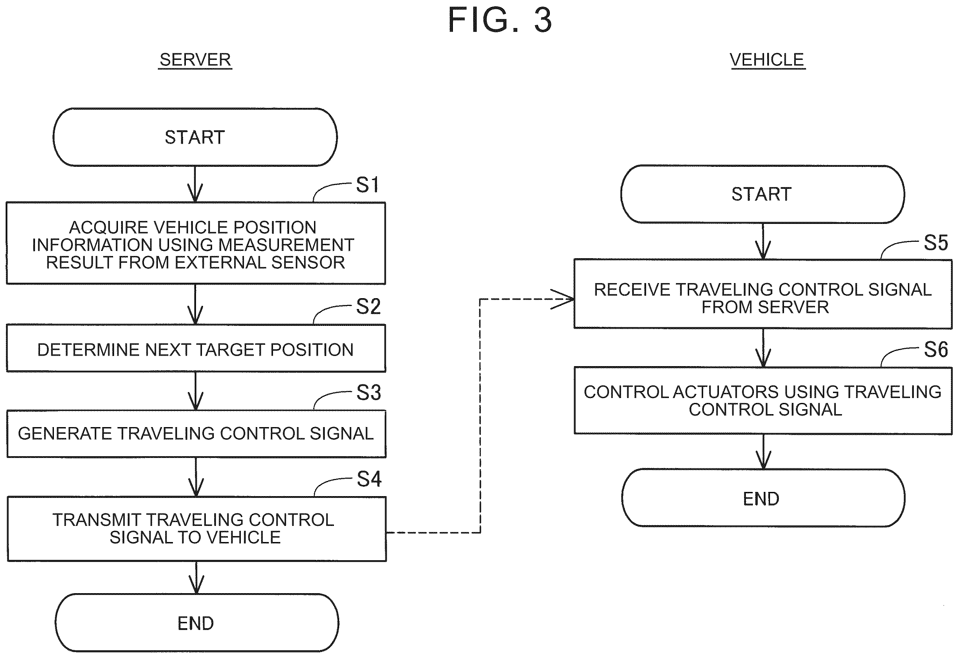

FIG. 3 is a flowchart showing the processing procedure of travel control for the vehicle 100 according to the first embodiment. The travel control is a process for causing the vehicle to travel in the factory FC by unattended driving. The travel control is performed when the vehicle 100 is switched ON in the factory FC. In the processing procedure of FIG. 3, the processor 201 of the server 200 functions as the remote control unit 211 by executing the program PG2. The processor 111 of the vehicle 100 functions as the vehicle control unit 115 by executing the program PG1.

In step S1, the processor 201 of the server 200 acquires vehicle position information using a measurement result from the external sensor 300. The vehicle position information serves as a basis for generating the traveling control signal. In the present embodiment, the vehicle position information includes the position and orientation of the vehicle 100 in the global coordinate system GC of the factory FC.

Specifically, in step S1, the vehicle position estimation unit 213 of the processor 201 estimates the position of the vehicle 100, for example, by detecting the outer shape of the vehicle 100 using three-dimensional point cloud data, calculating the coordinates of the positioning point of the vehicle 100 in a local coordinate system, and converting the calculated coordinates into coordinates in the global coordinate system GC. The outer shape of the vehicle 100 can be detected, for example, by inputting the three-dimensional point cloud data to a detection model DM using artificial intelligence. The detection model DM is prepared, for example, inside or outside the system 50, and is prestored in the memory 202 of the server 200. Examples of the detection model DM include a trained machine learning model that has been trained to achieve either of semantic segmentation and instance segmentation. For example, a convolutional neural network (hereinafter referred to as "CNN") trained through supervised learning using a training dataset can be used as the machine learning model. The training dataset includes, for example, a plurality of training images including the vehicle 100, and a label indicating whether each region in the training images is a region indicating the vehicle 100 or a region indicating a field other than the vehicle 100. During training of the CNN, parameters of the CNN are preferably updated to reduce a deviation between the result output from the detection model DM and the label through backpropagation. The processor 201 can acquire the orientation of the vehicle 100 by estimating the orientation, for example, based on the direction of a movement vector of the vehicle 100 calculated from variations in position of feature points of the vehicle 100 between frames of the three-dimensional point cloud data using an optical flow method. The vehicle position information may be acquired by template matching using reference point cloud data. The reference point cloud data is prestored in the memory 202. The vehicle position information is acquired using the position and orientation of the vehicle 100 estimated in this manner.

In step S2, the processor 201 of the server 200 determines a target position to which the vehicle 100 is expected to move next. In the present embodiment, the target position is represented by X, Y, and Z coordinates in the global coordinate system GC. The memory 202 of the server 200 prestores a reference route RR along which the vehicle 100 is expected to travel. The route is represented by a node indicating a departure point, nodes indicating waypoints, a node indicating a destination, and links connecting the nodes. The processor 201 determines the target position to which the vehicle 100 is expected to move next using the vehicle position information and the reference route RR. The processor 201 determines the target position on the reference route RR ahead of the current position of the vehicle 100.

In step S3, the processor 201 of the server 200 generates a traveling control signal for causing the vehicle 100 to travel toward the determined target position. The processor 201 calculates a traveling speed of the vehicle 100 based on transition in the position of the vehicle 100, and compares the calculated traveling speed with a target speed. In general, the processor 201 determines an acceleration such that the vehicle 100 accelerates when the traveling speed is lower than the target speed, and determines an acceleration such that the vehicle 100 decelerates when the traveling speed is higher than the target speed. When the vehicle 100 is located on the reference route RR, the processor 201 determines a steering angle and an acceleration such that the vehicle 100 does not deviate from the reference route RR. When the vehicle 100 is not located on the reference route RR, that is, when the vehicle 100 deviates from the reference route RR, the processor 201 determines a steering angle and an acceleration such that the vehicle 100 returns to the reference route RR.

In step S4, the processor 201 of the server 200 transmits the generated traveling control signal to the vehicle 100. The processor 201 repeats, at a predetermined cycle, the acquisition of the vehicle position information, the determination of the target position, the generation of the traveling control signal, and the transmission of the traveling control signal.

In step S5, the processor 111 of the vehicle 100 receives the traveling control signal transmitted from the server 200. In step S6, the processor 111 of the vehicle 100 controls the actuator group 120 using the received traveling control signal to cause the vehicle 100 to travel at the acceleration and the steering angle indicated by the traveling control signal. The processor 111 repeats, at a predetermined cycle, the reception of the traveling control signal and the control for the actuator group 120. With the system 50 according to the present embodiment, the vehicle 100 can be caused to travel by remote control, and the vehicle 100 can be moved without using transport equipment such as a crane or a conveyor.

### Estimation of Position of Vehicle 100 Including Liquid-wet Region

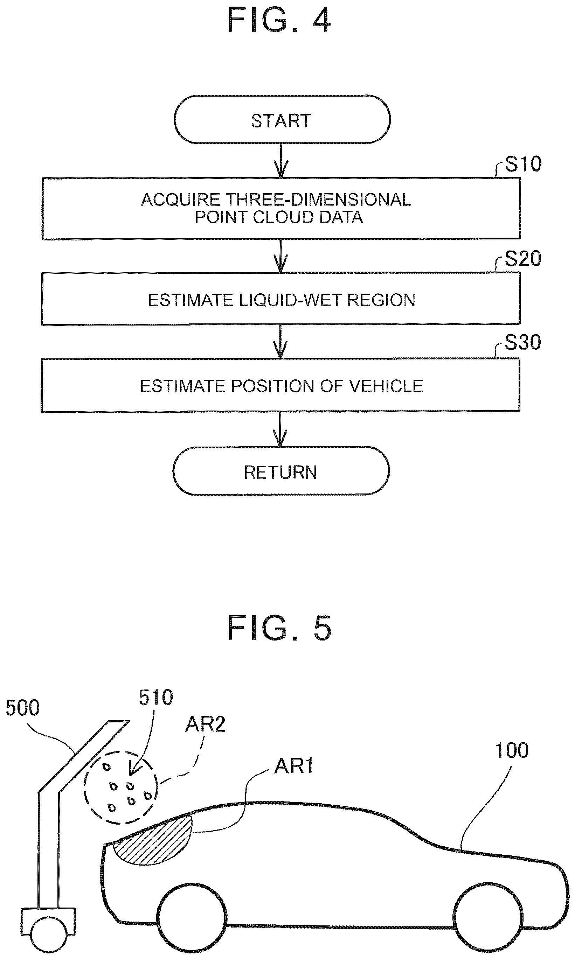

FIG. 4 is a flowchart showing the procedure for estimating the position of the vehicle 100 including the liquid-wet region. The procedure shown in FIG. 4 is performed when a step that uses a liquid, such as the water leakage inspection step or the cleaning step, is performed. The present embodiment illustrates an example in which the water leakage inspection step is performed on the vehicle 100.

FIG. 5 illustrates the water leakage inspection step. The water leakage inspection step is performed by spraying water onto the vehicle 100 to check whether water has entered the vehicle cabin. The water is sprayed by a water spraying device 500. The water spraying device 500 is also called a shower tester. The water spraying device 500 moves around the vehicle 100 while spraying water in a predetermined direction. The water spraying device 500 may be fixed in position, and the vehicle 100 may move relative to the water spraying device. In the water leakage inspection step, there are a region AR1 on the surface of the vehicle 100 where liquid droplets are present, and a region AR2 around the vehicle 100 where scattered liquid droplets 510 are present. In the present embodiment, the region AR1 and the region AR2 are collectively referred to as the liquid-wet region.

The liquid in the liquid-wet region may scatter light. This may result in deviations included in the three-dimensional data measured by the external sensor 300. Specifically, in the liquid-wet region, the obtained three-dimensional data may represent the presence of some kind of object due to scattering of light by the liquid even though no object is actually present. Such deviations may result in erroneous estimation of the position of the vehicle 100. To reduce the position estimation deviations caused by the water-wet region, the procedure for estimating the position of the vehicle 100 including the liquid-wet region as shown in FIG. 4 is performed.

In step S10 in FIG. 4, the acquisition unit 210 acquires three-dimensional point cloud data of the vehicle 100 measured using the external sensor 300. The three-dimensional point cloud data includes three-dimensional point cloud data related to the region on the surface of the vehicle 100 and the region around the vehicle 100. The three-dimensional point cloud data also includes three-dimensional point cloud data related to the liquid-wet region.

In step S20, the region estimation unit 212 estimates the liquid-wet region. In the present embodiment, the region estimation unit 212 estimates the liquid-wet region using position information related to the position of the water spraying device 500 acquired by the water spraying device position acquisition unit 214. The position information is acquired using the three-dimensional point cloud data measured by the external sensor 300 in the same manner as described in step S1 in FIG. 3. Since the water spraying device 500 releases water in the predetermined direction, the region AR2 shown in FIG. 5 within the liquid-wet region where the scattered liquid droplets 510 are present can be estimated using the position information of the water spraying device 500.

The region estimation unit 212 estimates the liquid-wet region using information related to the shape of the vehicle 100 in addition to the position information of the water spraying device 500. The information related to the shape of the vehicle 100 is prestored in the memory 202. The region AR1 shown in FIG. 5 within the liquid-wet region where the liquid droplets on the surface of the vehicle 100 are present can be estimated using the position information of the water spraying device 500 and the information related to the shape of the vehicle 100.

In step S30 shown in FIG. 4, the vehicle position estimation unit 213 estimates the position of the vehicle 100 using three-dimensional point cloud data obtained by excluding the three-dimensional point cloud data of the liquid-wet region from the three-dimensional data acquired by the acquisition unit 210. The position estimation using the three-dimensional point cloud data is performed in the same manner as described in step S1 shown in FIG. 3.

The position of the vehicle 100 estimated by the above method is used to acquire the vehicle position information in step S1 shown in FIG. 3.

In the system 50 of the first embodiment described above, the vehicle position estimation unit 213 estimates the position of the moving object using the three-dimensional point cloud data obtained by excluding the three-dimensional point cloud data of the liquid-wet region from the three-dimensional point cloud data. Therefore, compared to a configuration in which the position is estimated without excluding the three-dimensional point cloud data of the liquid-wet region, it is possible to suppress the occurrence of deviations in the three-dimensional point cloud data due to the liquid droplets and to suppress a decrease in the accuracy of the position estimation.

In the system 50 of the first embodiment, the region estimation unit 212 estimates the liquid-wet region using the position information related to the position of the water spraying device 500. Therefore, the liquid-wet region can be estimated even if the position of the water spraying device 500 varies from the predetermined position.

### B. Second Embodiment

A system of a second embodiment differs from the system 50 of the first embodiment in that the processor 201 further functions as a step information acquisition unit, and in terms of the method for estimating the liquid-wet region by the region estimation unit 212. Since the configuration of the system of the second embodiment is otherwise the same as that of the system 50 of the first embodiment, description thereof will be omitted.

The step information acquisition unit functions by the processor 201 shown in FIG. 2 executing the program PG2 stored in the memory 202. Illustration will be omitted for the step information acquisition unit. The step information acquisition unit acquires step information related to a step that is being performed on the vehicle 100. As described above, the vehicle 100 undergoes various steps in the factory FC shown in FIG. 1. The sequence of the steps to be performed is predetermined and stored in the memory 202 as sequence information. When the step is completed on the vehicle 100, completion information indicating that the step is completed is written in the memory 202. The step information acquisition unit acquires the step currently performed on the vehicle 100 as the step information using the sequence information and the completion information. In the present embodiment, the step information includes information related to the water leakage inspection step and the cleaning step. The step information also includes information related to the region onto which the liquid is sprayed in the water leakage inspection step or the cleaning step. That is, the step information includes information related to the region that may be the liquid-wet region in the water leakage inspection step or the cleaning step.

The region estimation unit 212 shown in FIG. 2 estimates the liquid-wet region using the step information acquired by the step information acquisition unit. The region estimation unit 212 of the first embodiment estimates the liquid-wet region using the position information related to the position of the water spraying device 500 acquired by the water spraying device position acquisition unit 214. The region estimation unit 212 of the second embodiment estimates the liquid-wet region using the step information instead of the position information of the water spraying device 500.

The system of the second embodiment described above can also suppress the occurrence of deviations in the three-dimensional point cloud data due to the liquid droplets and suppress a decrease in the accuracy of the position estimation.

In the system 50 of the second embodiment, the region estimation unit 212 estimates the liquid-wet region using the step information including the information related to the region onto which the liquid is sprayed. Therefore, the liquid-wet region can be estimated with high accuracy by preparing appropriate step information in advance.

### C. Third Embodiment

A system of a third embodiment differs from the system 50 of the first embodiment in that an image capturing device is added separately from the external sensor 300, in that the processor 201 further functions as a captured image data acquisition unit, and in terms of the method for estimating the liquid-wet region by the region estimation unit 212. Since the configuration of the system of the third embodiment is otherwise the same as that of the system 50 of the first embodiment, description thereof will be omitted.

The image capturing device captures an image of the vehicle 100 and the region around the vehicle 100, and outputs captured image data. The image capturing device is provided in the factory FC at the travel path TR, the first location PL1, the second location PL2, etc. shown in FIG. 1. The image capturing device is, for example, a camera. Illustration will be omitted for the image capturing device in FIG. 1. The captured image data is transmitted to the server 200 by wired or wireless communication.

The captured image data acquisition unit functions by the processor 201 shown in FIG. 2 executing the program PG2 stored in the memory 202. Illustration will be omitted for the captured image data acquisition unit. The captured image data acquisition unit acquires the captured image data output by the image capturing device.

The region estimation unit 212 estimates the liquid-wet region using the acquired captured image data. The region estimation unit 212 of the first embodiment estimates the liquid-wet region using the position information related to the position of the water spraying device 500 acquired by the water spraying device position acquisition unit 214. The region estimation unit 212 of the third embodiment estimates the liquid-wet region using the captured image data instead of the position information of the water spraying device 500. The region estimation unit 212 estimates the liquid-wet region using a known image detection technology such as a convolutional neural network. The region estimation unit 212 may also estimate the liquid-wet region from the position of the water spraying device 500 included in the captured image data.

The system of the third embodiment described above can also suppress the occurrence of deviations in the three-dimensional point cloud data due to the liquid droplets and suppress a decrease in the accuracy of the position estimation.

In the system of the third embodiment, the region estimation unit 212 estimates the liquid-wet region using the captured image data obtained by the image capturing device. Therefore, the liquid-wet region can be estimated, for example, using the camera that captures images inside the factory FC.

### D. Fourth Embodiment

### Schematic Configuration of System 50v

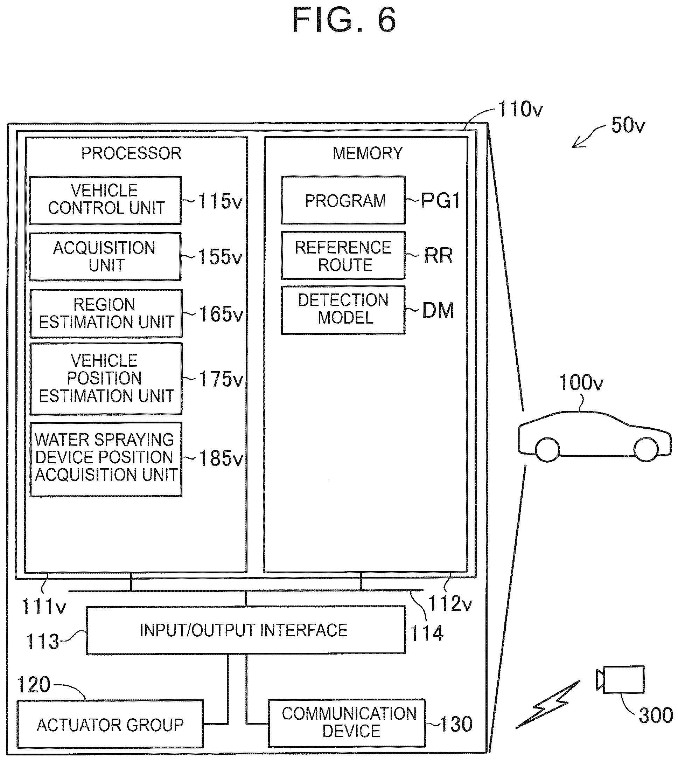

FIG. 6 illustrates a schematic configuration of a system 50v according to a fourth embodiment. The present embodiment differs from the first embodiment in that the system 50v does not include the server 200. A vehicle 100v in the present embodiment can travel by autonomous control on the vehicle 100v. The other configuration of the fourth embodiment is the same as that of the first embodiment unless otherwise specified.

In the present embodiment, a processor 111v of a vehicle control device 110v functions as a vehicle control unit 115v by executing the program PG1 stored in a memory 112v. The vehicle control unit 115v acquires output results from the sensors, generates a traveling control signal using the output results, and outputs the generated traveling control signal to operate the actuator group 120. Thus, the vehicle 100v can travel by autonomous control. In the present embodiment, the memory 112v prestores the detection model DM and the reference route RR in addition to the program PG1.

### Travel Control for Vehicle 100v

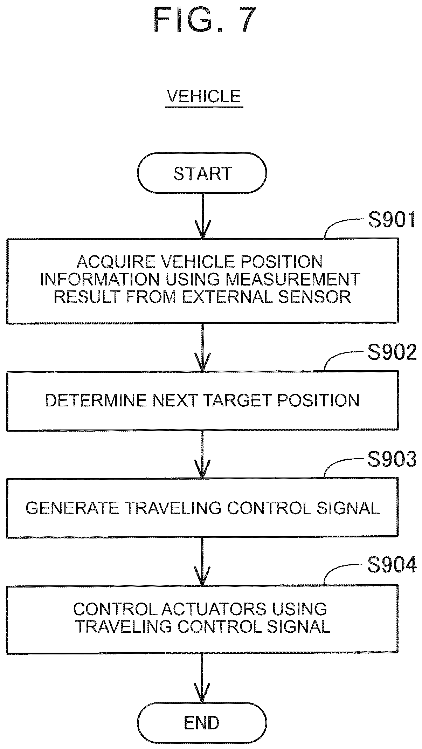

FIG. 7 is a flowchart showing the processing procedure of travel control for the vehicle 100v according to the fourth embodiment. The processing procedure shown in FIG. 7 is performed by the vehicle 100v alone to cause the vehicle 100v to travel by unattended driving. That is, the processing procedure differs from the travel processing procedure shown in FIG. 3 in that the server 200 is not used. In the processing procedure of FIG. 7, the processor 111v of the vehicle 100v functions as the vehicle control unit 115v by executing the program PG1.

In step S901, the processor 111v of the vehicle control device 110v acquires vehicle position information using a measurement result output from the external sensor 300. In step S902, the processor 111v determines a target position to which the vehicle 100v is expected to move next. In step S903, the processor 111v generates a traveling control signal for causing the vehicle 100v to travel toward the determined target position. In step S904, the processor 111v controls the actuator group 120 using the generated traveling control signal to cause the vehicle 100v to travel based on parameters indicated by the traveling control signal. The processor 111v repeats, at a predetermined cycle, the acquisition of the vehicle position information, the determination of the target position, the generation of the traveling control signal, and the control on the actuators. With the system 50v according to the present embodiment, the vehicle 100v can travel by autonomous control on the vehicle 100v even if the vehicle 100v is not remotely controlled by the server 200.

### Other Configuration of System 50v

The processor 111v in the present embodiment also functions as an acquisition unit 155v, a region estimation unit 165v, a vehicle position estimation unit 175v, and a water spraying device position acquisition unit 185v by executing the program PG1 stored in the memory 112v. The acquisition unit 155v, the region estimation unit 165v, the vehicle position estimation unit 175v, and the water spraying device position acquisition unit 185v have the same functions as the acquisition unit 210, the region estimation unit 212, the vehicle position estimation unit 213, and the water spraying device position acquisition unit 214 of the first embodiment, respectively. Therefore, in the present embodiment, the same process as the estimation of the position of the vehicle 100 including the liquid-wet region shown in FIG. 4 is performed by the processor 111v.

The processor 111v may function as the step information acquisition unit described in the second embodiment and the captured image data acquisition unit described in the third embodiment by executing the program PG1. That is, the system of the second embodiment and the system of the third embodiment may be implemented by the vehicle 100 alone without using the server 200.

The system 50v of the fourth embodiment described above can also perform the vehicle control process and the position estimation process for the vehicle 100 including the liquid-wet region.

### E. Other Embodiments

(E1) In each of the above embodiments, the position estimation process for the vehicle 100 including the liquid-wet region may be performed in any step that uses a liquid. The liquid may be any liquid other than water.

(E2) In each of the above embodiments, the server 200 may be an information processing device having any configuration.

(E3) In each of the above embodiments, the memories 112, 112v, 202 may be any storage devices. Examples of such storage devices include hard disc drives (HDDs), solid state drives (SSDs), and dynamic random access memories (DRAMs).

(E4) In each of the above embodiments, the external sensor 300 may be any distance measuring device that adopts a technology other than LiDAR.

(E5) In each of the above embodiments, the water spraying device 500 may spray any liquid other than water.

### F. Still Other Embodiments

(F1) In the first embodiment, the server 200 performs the process from the acquisition of vehicle position information to the generation of a traveling control signal. Alternatively, the vehicle 100 may perform at least part of the process from the acquisition of vehicle position information to the generation of a traveling control signal. For example, the following aspects (1) to (3) may be adopted.
(1) The server 200 may acquire vehicle position information, determine a target position to which the vehicle 100 is expected to move next, and generate a route from the current position of the vehicle 100 indicated by the acquired vehicle position information to the target position. The server 200 may generate a route to a target position between the current position and the destination, or may generate a route to the destination. The server 200 may transmit the generated route to the vehicle 100. The vehicle 100 may generate a traveling control signal such that the vehicle 100 travels on the route received from the server 200, and control the actuator group 120 using the generated traveling control signal.
(2) The server 200 may acquire vehicle position information and transmit the acquired vehicle position information to the vehicle 100. The vehicle 100 may determine a target position to which the vehicle 100 is expected to move next, generate a route from the current position of the vehicle 100 indicated by the received vehicle position information to the target position, generate a traveling control signal such that the vehicle 100 travels on the generated route, and control the actuator group 120 using the generated traveling control signal.
(3) In the above aspects (1) and (2), an internal sensor may be mounted on the vehicle 100 and a detection result output from the internal sensor may be used in at least one of the generation of a route and the generation of a traveling control signal. The internal sensor is mounted on the vehicle 100. Examples of the internal sensor may include a sensor that detects a motion state of the vehicle 100, a sensor that detects operational states of various components of the vehicle 100, and a sensor that detects the environment around the vehicle 100.

Specific examples of the internal sensor may include a camera, a LiDAR, a millimeter wave radar, an ultrasonic sensor, a global positioning system (GPS) sensor, an acceleration sensor, and a gyro sensor. For example, in the above aspect (1), the server 200 may acquire a detection result from the internal sensor and reflect the detection result from the internal sensor in a route when generating the route. In the above aspect (1), the vehicle 100 may acquire a detection result from the internal sensor and reflect the detection result from the internal sensor in a traveling control signal when generating the traveling control signal. In the above aspect (2), the vehicle 100 may acquire a detection result from the internal sensor and reflect the detection result from the internal sensor in a route when generating the route. In the above aspect (2), the vehicle 100 may acquire a detection result from the internal sensor and reflect the detection result from the internal sensor in a traveling control signal when generating the traveling control signal.

(F2) In the fourth embodiment, an internal sensor may be mounted on the vehicle 100v and a detection result output from the internal sensor may be used in at least one of the generation of a route and the generation of a traveling control signal. For example, the vehicle 100v may acquire a detection result from the internal sensor and reflect the detection result from the internal sensor in a route when generating the route. The vehicle 100v may acquire a detection result from the internal sensor and reflect the detection result from the internal sensor in a traveling control signal when generating the traveling control signal.

(F3) In the fourth embodiment, the vehicle 100v acquires the vehicle position information using the detection result from the external sensor 300. An internal sensor may be mounted on the vehicle 100v, and the vehicle 100v may acquire vehicle position information using a detection result from the internal sensor, determine a target position to which the vehicle 100v is expected to move next, generate a route from the current position of the vehicle 100v indicated by the acquired vehicle position information to the target position, generate a traveling control signal such that the vehicle 100v travels on the generated route, and control the actuator group 120 using the generated traveling control signal. In this case, the vehicle 100v can travel without using the detection result from the external sensor 300. The vehicle 100v may acquire a target arrival time and traffic congestion information from the outside of the vehicle 100v, and reflect the target arrival time or the traffic congestion information in at least one of the route and the traveling control signal.

(F4) In the first embodiment, the server 200 automatically generates a traveling control signal to be transmitted to the vehicle 100. The server 200 may generate the traveling control signal to be transmitted to the vehicle 100 in response to an operation by an external operator outside the vehicle 100. For example, the external operator may operate a manipulation device including a display that displays a captured image output from the external sensor 300, a steering wheel, an accelerator pedal, and a brake pedal that are used to remotely operate the vehicle 100, and a communication device that communicates with the server 200 by wired or wireless communication, and the server 200 may generate a traveling control signal in response to an operation performed on the manipulation device.

(F5) In each of the above embodiments, the vehicle 100 only needs to include components that enable movement by unattended driving, and may be, for example, in the form of a platform including the following components. Specifically, the vehicle 100 only needs to include at least the vehicle control device 110 and the actuator group 120 to implement three functions including "running," "turning," and "stopping" by unattended driving. In order for the vehicle 100 to acquire information from the outside for unattended driving, the vehicle 100 only needs to include the communication device 130. That is, at least part of interior components such as a driver's seat or a dashboard, at least part of exterior components such as a bumper or a fender, or a body shell may be omitted from the vehicle 100 that is movable by unattended driving. In this case, the remaining components such as the body shell may be mounted on the vehicle 100 before the vehicle 100 is shipped from the factory FC, or may be mounted on the vehicle 100 after the vehicle 100 is shipped from the factory FC with the remaining components such as the body shell unmounted on the vehicle 100. The components may be mounted on the vehicle 100 from any side such as the upper side, the lower side, the front side, the rear side, the right side, or the left side, and may be mounted from the same side or from different sides. Also in the form of a platform, the position may be determined as with the vehicle 100 according to the first embodiment.

(F6) The vehicle 100 may be manufactured by combining a plurality of modules. A module refers to a unit composed of one or more components grouped according to the structure and function of the vehicle 100. For example, the platform of the vehicle 100 may be manufactured by combining a front module constituting a front part of the platform, a central module constituting a central part of the platform, and a rear module constituting a rear part of the platform. The number of modules constituting the platform is not limited to three, and may be two or less or four or more. Part of the vehicle 100 other than the platform may be modularized in addition to or instead of the platform. The various modules may include any exterior component such as a bumper or a grille, or any interior component such as a seat or a console. Not only the vehicle 100 but also moving objects in any forms may be manufactured by combining a plurality of modules. For example, such modules may be manufactured by joining a plurality of components by welding, using a fixture, etc., or may be manufactured by integrally molding at least part of the modules as a single component by casting. The molding method for integrally molding at least part of the modules as a single component is also referred to as gigacasting or megacasting. With the gigacasting, each part of the moving object that has hitherto been formed by joining a plurality of components can be formed as a single component. For example, the front module, the central module, and the rear module may be manufactured by gigacasting.

(F7) Transport of the vehicle 100 through unattended driving of the vehicle 100 is called "self-propelled transport." The configuration for implementing the self-propelled transport is called "vehicle remote control autonomous driving transport system." The method of producing the vehicle 100 using the self-propelled transport is called "self-propelled production." In the self-propelled production, for example, at least part of the transport of the vehicle 100 in the factory FC that manufactures the vehicle 100 is implemented by the self-propelled transport.

(F8) In each of the above embodiments, part or all of the functions and processes implemented by software may be implemented by hardware. Part or all of the functions and processes implemented by hardware may be implemented by software. Examples of hardware that may be used for implementing the various functions in each of the above embodiments include various types of circuit such as integrated circuits and discrete circuits.

The present disclosure is not limited to the above embodiments, and can be implemented by a variety of configurations without departing from the spirit of the present disclosure. For example, the technical features in each embodiment corresponding to the technical features in each aspect described in "SUMMARY OF THE INVENTION" can be replaced or combined as appropriate in order to solve part or all of the above issues or achieve part or all of the above effects. When the technical features are not described as being essential herein, these features can be omitted as appropriate.

## Claims

1. A system for estimating a position of a moving object in a manufacturing process for the moving object, the system comprising:
an acquisition unit configured to acquire three-dimensional point cloud data of the moving object measured using a distance measuring device;
a region estimation unit configured to estimate a liquid-wet region that is a region containing liquid droplets in a combined region including a region on a surface of the moving object and a region around the moving object; and
a position estimation unit configured to estimate the position of the moving object using three-dimensional point cloud data obtained by excluding three-dimensional point cloud data of the liquid-wet region from the acquired three-dimensional point cloud data.

2. The system according to claim 1, further comprising a water spraying device position acquisition unit configured to acquire position information related to a position of a water spraying device configured to spray water onto the moving object, wherein
the region estimation unit is configured to estimate the liquid-wet region using the acquired position information.

3. The system according to claim 1, further comprising a step information acquisition unit configured to acquire step information related to a step that is being performed on the moving object, wherein
the step information includes information related to a region onto which a liquid is sprayed in a water leakage inspection step or a cleaning step that is being performed on the moving object, and
the region estimation unit is configured to estimate the liquid-wet region using the acquired step information.

4. The system according to claim 1, further comprising a captured image data acquisition unit configured to acquire captured image data of the moving object and surroundings of the moving object, the captured image data being obtained by an image capturing device, wherein
the region estimation unit is configured to estimate the liquid-wet region using the acquired captured image data.
